# EUROPEAN PATENT APPLICATION

(11) **EP 4 583 008 A1**
(43) Date of publication of application: **09.07.2025**
(21) Application number: 24150034.7
(22) Date of filing: 02.01.2024
(51) Int. Cl.: G06N 5/022, G05B 17/02, G06F 30/12, G06F 30/18, G06F 111/12, G06F 113/14, G06F 119/02, G06F 119/20

(54) **METHOD AND SYSTEM FOR DIGITALIZING AND ANALYSING ENGINEERING DIAGRAMS FOR INDUSTRY ENVIRONMENT**

(71) Applicant: Siemens Aktiengesellschaft, 80333 München (DE)
(72) Inventor: GANESH, Gautam, 560030 Bangalore (IN); N, Madhusudanan, 560036 Bengaluru, Karnataka (IN)
(74) Representative: Isarpatent

(57) **Abstract**

Disclosed is a method (100) and a system (200) for digitalizing and analysing an engineering diagram (310, 400A) for an industry environment. The method comprises converting raw data from the engineering diagram, including at least one of graphical symbols, textual annotations, and connections, into a structured digital data through an extraction process. The method further comprises mapping the structured digital data to a predefined standards-based ontology (314) to generate a knowledge graph (318, 400B), compliant with predefined semantic standards, corresponding to the engineering diagram, wherein the predefined standards-based ontology comprises entities and their corresponding attributes, and interrelations therebetween related to the engineering diagram. The method further comprises conducting graph-based analytics on the knowledge graph (318, 400B) to extract one or more parameters pertaining to the engineering diagram, for the industry environment.

## Description

The present invention relates generally to the field of process industry engineering, and specifically to methods and systems for digitalizing and analysing engineering diagrams using semantic knowledge graphs.

Engineering diagrams, also known as engineering drawings or engineering schematics, such as Piping and Instrumentation diagrams (P&IDs), are artifacts that define the topological design and the control philosophy of a process plant and are extensively used by engineers to understand the plant operation in the process industry. P&IDs contain information about all the available mechanical and electrical equipment used by the plant process, the instrumentation devices used to control the process along the interconnections between the equipment and instruments forming the topology of the plant process itself. Additionally, supplementary information such as product specifications, and equipment parameters can be found within the P&ID artifact or across a web of reference documentation.

Experts refer to P&IDs for planning operating schemes, safety, operational analysis (HAZOP), and maintenance activities, to name a few. This requires thorough scrutiny of the P&ID sheets by experts. For Brownfield plants, P&IDs are either hand drawn or created using simple design tools and are mainly available as scanned drawing sheets. As for Greenfield plants, P&IDs are created using drafting software, which helps in maintaining a digital version of the same. However, in both the cases, the analytics and deriving of intelligence from the created P&IDs is not straightforward. There are multiple challenges normally encountered with respect to analytics and intelligence extraction from P&IDs.

The foremost challenge is a lack of automation in getting insights from P&ID(s), i.e., high level details of the plant like bill of materials, critical parts, sub-assembly structure, process information of the plants, etc. Currently, engineers (especially in the Brownfield scenario) may need to manually go through multiple sheets of drawings to obtain such information. Also, every time an engineer needs to take any action with regard to plant design (planning, modification, HAZOP, etc.), they may have to search for the relevant sheets of P&ID manually. This leads to repeated manual effort in scanning/lookup of the P&IDs.

Also, there is a challenge due to large and possibly connected corpus of P&IDs. Even for a small plant, the number of P&IDs can go up to 50-100 separate sheets. It is difficult and time consuming to manually interpret and fully comprehend the plant design. An engineer may need to concentrate on a subsystem in the plant process, which may span over a few P&ID sheets. They must go over multiple sheets to get a full picture of the subsystem.

Further, to perform some analysis on P&IDs, multiple levels of reviews are required by experts to ensure correctness. Moreover, for some applications, experts with different skill sets are required to analyse the same P&IDs. Each of these experts come with their own knowledge base and subsidiary information related to the plant. This makes the entire process complex and timeconsuming. It also becomes mandatory to have experts with a good amount of knowledge about the plant, to perform any critical operation.

Existing methodologies and technologies have primarily focused on leveraging machine learning (ML) techniques for the extraction of data from P&IDs, such as text, symbols, and line information. While these approaches are effective in creating digital representations of P&IDs, they generally lack the depth required for advanced analytics and are often limited to basic functionalities like alarm monitoring and addressing. Some publications in this field have directed their efforts toward building asset hierarchies and object-oriented models using information extraction techniques. These models, while capturing connectivity information, do not fully exploit the potential of semantic knowledge graphs and the rich insights they can offer when combined with graph algorithms such as traversals and impact analysis. Further, the current landscape includes open-source initiatives and standards that aim to establish semantic tagging for smart device data and define information models for processing plants. However, these are primarily focused on broader plant equipment metadata and do not adequately address the specific needs of the engineering schematics, such as capturing the detailed topology, rules, and constraints inherent to processing plants.

Moreover, the tools available, for example, for P&ID authoring and design, while sophisticated in their capabilities, also exhibit limitations. They often provide smart authoring features and integration with various data management systems but fall short in offering in-depth semantic graph-based analytics post-authoring. Furthermore, existing solutions that integrate multiple plant data sources for asset management or employ deep learning frameworks for information extraction from P&IDs do not fully incorporate the domain knowledge essential for comprehensive analysis. They often lack a standard, reusable model that captures the domain-specific rules, constraints, and topological patterns as required for P&ID analysis.

The present invention seeks to address these shortcomings by introducing an approach that not only alleviates the above pain points by the application of semantic knowledge graphs to represent P&IDs in a standard ontology but also enriches automated analytics capabilities by capturing the topological intelligence that is inherent in an engineering diagram as well as its associated metadata into an ontological model which opens up application of wide range of graph algorithms and semantic inferencing. This also includes working details of a suite of possible knowledge graph driven analytics applications including faceted search, impact analysis, and path traversals, etc. applied to the engineering diagrams, all included in an easy to consume service-oriented architecture.

The object of the present invention is achieved by a method for digitalizing and analysing an engineering diagram for an industry environment. The method comprises converting raw data from the engineering diagram, including at least one of graphical symbols, textual annotations, and connections, into a structured digital data through an extraction process. The method further comprises mapping the structured digital data to a predefined standards-based ontology to generate a knowledge graph, compliant with predefined semantic standards, corresponding to the engineering diagram, wherein the predefined standards-based ontology comprises entities and their corresponding attributes, and interrelations therebetween related to the engineering diagram. The method further comprises conducting graph-based analytics on the knowledge graph to extract one or more parameters pertaining to the engineering diagram, for the industry environment.

In one or more embodiments, converting the raw data into the structured digital data comprises implementing one or more of optical character recognition (OCR) and symbol recognition algorithms to detect the at least one of graphical symbols, textual annotations, and connections from scanned images or digital representations of the engineering diagram.

In one or more embodiments, mapping the structured digital data to the predefined standards-based ontology comprises utilizing an Extract, Transform, Load (ETL) process to align at least one of the graphical symbols, the textual annotations, and the connections with corresponding at least one of the entities and the interrelations in the predefined standards-based ontology.

In one or more embodiments, the predefined standards-based ontology is developed by defining logical axioms pertaining to a domain of the industry environment, that facilitates semantic inferencing, for deduction of implicit relationships for data points in the knowledge graph.

In one or more embodiments, applying a set of semantic rules for validating the knowledge graph against the predefined standards-based ontology using Shapes Constraint Language (SHACL).

In one or more embodiments, applying the set of semantic rules comprises executing SPARQL-based Quality Assurance (QA) queries to identify data discrepancies and implement data integrity across the knowledge graph.

In one or more embodiments, conducting the graph-based analytics comprises executing property graph-based traversal algorithms to navigate the knowledge graph and determine equipment connectivity and control loop configurations from the engineering diagram, in the industry environment.

In one or more embodiments, conducting the graph-based analytics comprises executing centrality and path analysis algorithms on the knowledge graph to determine pathways and potential points of failure from the engineering diagram, in the industry environment.

In one or more embodiments, the graph-based analytics is conducted to perform impact analysis for evaluating potential implications of component failures within the industry environment.

In one or more embodiments, the graph-based analytics is conducted to perform pattern recognition to identify recurring subgraph configurations across the knowledge graph, indicative of standard subsystems or assemblies within the industry environment.

In one or more embodiments, the graph-based analytics is conducted to perform root cause analysis utilizing the knowledge graph to determine origin of system failures or performance anomalies within the industry environment.

In one or more embodiments, the method further comprises implementing machine learning algorithms to generate graph embeddings from the knowledge graph for one or more of: computation of similarity scores between different engineering diagrams based on respective topological and functional attributes, generating design recommendation(s) for auto-completion of other engineering diagrams for the industry environment.

In one or more embodiments, the engineering diagram comprises at least one of a piping and instrumentation (P&ID) diagram, an electrical wiring diagram, an engineering design of a technical installation, and a floor layout of a technical installation.

The object of the present invention is also achieved by a system comprising one or more processing units and a memory unit communicatively coupled to the one or more processing units. Herein, the memory unit comprises an engineering diagram analysis module stored in the form of machine-readable instructions executable by the one or more processing units, wherein the engineering diagram analysis module is configured to perform aforementioned method steps for digitalizing and analysing the engineering diagram within the industry environment.

The object of the present invention is further achieved by a computer program product, having machine-readable instructions stored therein, that when executed by the one or more processing units, cause the one or more processing units to perform aforementioned method steps.

Still, other aspects, features, and advantages of the invention are readily apparent from the following detailed description, simply by illustrating a number of particular embodiments and implementations, including the best mode contemplated for carrying out the invention. The invention is also capable of other and different embodiments, and its several details may be modified in various obvious respects, all without departing from the scope of the invention. Accordingly, the drawings and description are to be regarded as illustrative in nature, and not as restrictive.

A more complete appreciation of the present invention and many of the attendant aspects thereof will be readily obtained as the same becomes better understood by reference to the following description when considered in connection with the accompanying drawings:
- FIG 1: is a flowchart of a method for digitalizing and analysing an engineering diagram for an industry environment, in accordance with one or more embodiments of the present invention;
- FIG 2: is a block diagram representation of a system for digitalizing and analysing the engineering diagram for the industry environment, in accordance with one or more embodiments of the present invention;
- FIG 3: is a schematic diagram for a process flow for digitalizing and analysing the engineering diagram for the industry environment, in accordance with one or more embodiments of the present invention;
- FIG 4A: is an exemplary engineering diagram for an industry environment, in accordance with one or more embodiments of the present invention;
- FIG 4B: is an exemplary knowledge graph corresponding to the engineering diagram of FIG 4A based on predefined standards-based ontology, in accordance with one or more embodiments of the present invention;
- FIG 5: is a depiction of topological analysis for an exemplary engineering diagram, in accordance with one or more embodiments of the present invention;
- FIG 6: is a depiction of impact analysis for an exemplary engineering diagram, in accordance with one or more embodiments of the present invention; and
- FIG 7: is a depiction of a user interface for faceted search by implementing pattern recognition for an exemplary engineering diagram, in accordance with one or more embodiments of the present invention.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Examples of a method, a system, and a computer-program product for identifying test scenarios for testing behaviour competencies of autonomous vehicles are disclosed herein. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

The present invention introduces a novel approach for digitalizing and analysing engineering diagrams for the industry environments. This involves the use of semantic knowledge graphs to represent the engineering diagrams within a standard ontology, capturing the inherent topological intelligence and associated metadata. This approach facilitates a broad range of graph algorithms and semantic inferencing, enabling advanced analytics applications such as faceted search, impact analysis, and path traversals in an accessible service-oriented architecture. The present invention provides application of semantic knowledge graph technology for automated analytics and intelligence extraction from the engineering diagram by creating an integrated source of knowledge that semantically captures the entire structure of the engineering diagram and their supplementary domain information adhering to a standard specification as a single source of truth; and responding intelligently to any interrogations related to the layout, relationships, impacts of different components in the engineering diagram.

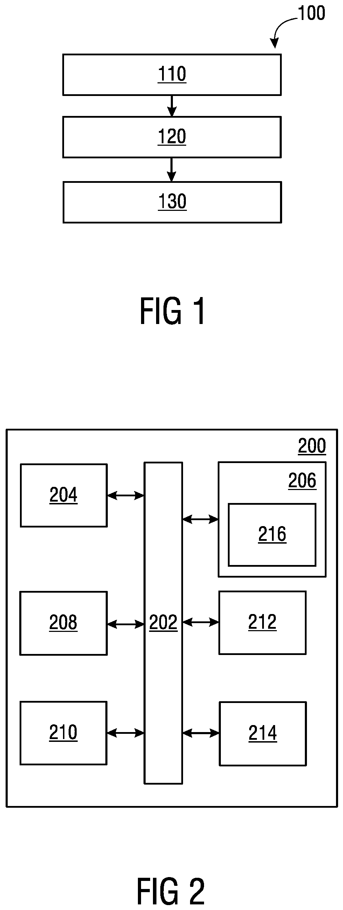

Referring now to FIG 1, illustrated is a flowchart of a method (as represented by reference numeral 100) for digitalizing and analysing an engineering diagram for an industry environment, in accordance with an embodiment of the present invention. As used herein, "industry environment" refers to the operational setting or context within which industrial processes and activities occur. This may include process plants and facilities in sectors such as manufacturing, chemical processing, energy production, and other areas where complex systems and machinery are used. In the present invention, the industry environment utilizes the engineering diagrams to understand, manage, and optimize these industrial processes, highlighting the practical application of the engineering diagrams in real-world industrial settings.

Further, the "engineering diagram" refers to a graphical representation that conveys the design, structure, and functional relationships of components within a technical or engineering project, for the industry environment. In the present embodiments, the engineering diagram comprises at least one of a piping and instrumentation (P&ID) diagram, an electrical wiring diagram, an engineering design of a technical installation, and a floor layout of a technical installation. For example, herein, a Piping and Instrumentation Diagram (P&ID) may detail the layout of pipes, instruments, equipment, and their interconnections within a process plant. An electrical wiring diagram is a schematic representation showing the electrical connections and layout of an electrical system or circuit in a specific installation or device. An engineering design of a technical installation refers to the detailed planning and schematic representation of the structural, mechanical, electrical, and control elements of an industrial or technical system. A floor layout of a technical installation is a diagrammatic representation illustrating the physical arrangement and spatial organization of equipment, machinery, and infrastructure within a specific industrial or technical facility. These diagrams serve as critical tools for understanding and analysing the operational aspects of industrial systems, including mechanical, electrical, and control aspects.

Referring to FIG 2, illustrated is a block diagram of a system 200 for digitalizing and analysing the engineering diagram for the industry environment, in accordance with one or more embodiments of the present invention. It may be appreciated that the system 200 described herein may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

In an example, the system 200 may be embodied as a computer-program product programmed for digitalizing and analysing the engineering diagram for the industry environment. The system 200 may be incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device may be implemented in a single chip. As illustrated, the system 200 includes a communication mechanism such as a bus 202 for passing information among the components of the system 200. The system 200 includes one or more processing units 204 and one or more memory units 206. Herein, the memory unit 206 is communicatively coupled to the processing unit 204. In an example, the memory unit 206 may be embodied as a computer readable medium on which program code sections of a computer program are saved, the program code sections being loadable into and/or executable in a system to make the system 200 execute the steps for performing the said purpose.

Generally, as used herein, the term "processing unit" refers to a computational element that is operable to respond to and processes instructions that drive the system 200. Optionally, the processing unit includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the term "processing unit" may refer to one or more individual processors, processing devices and various elements associated with a processing device that may be shared by other processing devices. Additionally, the one or more individual processors, processing devices and elements are arranged in various architectures for responding to and processing the instructions that drive the system 200.

Herein, the memory unit 206 may be volatile memory and/or nonvolatile memory. The memory unit 206 may be coupled for communication with the processing unit 204. The processing unit 204 may execute instructions and/or code stored in the memory unit 206. A variety of computer-readable storage media may be stored in and accessed from the memory unit 206. The memory unit 206 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In particular, the processing unit 204 has connectivity to the bus 202 to execute instructions and process information stored in the memory unit 206. The processing unit 204 may include one or more processing cores with each core configured to perform independently. A multi-core processor enables multiprocessing within a single physical package. Examples of a multi-core processor include two, four, eight, or greater numbers of processing cores. Alternatively, or in addition, the processing unit 204 may include one or more microprocessors configured in tandem via the bus 202 to enable independent execution of instructions, pipelining, and multithreading. The processing unit 204 may also be accompanied with one or more specialized components to perform certain processing functions and tasks such as one or more digital signal processors (DSP), and/or one or more application-specific integrated circuits (ASIC). Other specialized components to aid in performing the inventive functions described herein include one or more field programmable gate arrays (FPGA) (not shown), one or more controllers (not shown), or one or more other special-purpose computer chips.

The system 200 may further include an interface 208, such as a communication interface (with the said terms being interchangeably used) which may enable the system 200 to communicate with other systems for receiving and transmitting information. The communication interface 208 may include a medium (e.g., a communication channel) through which the system 200 communicates with other system. Examples of the communication interface 208 may include, but are not limited to, a communication channel in a computer cluster, a Local Area Communication channel (LAN), a cellular communication channel, a wireless sensor communication channel (WSN), a cloud communication channel, a Metropolitan Area Communication channel (MAN), and/or the Internet. Optionally, the communication interface 208 may include one or more of a wired connection, a wireless network, cellular networks such as 2G, 3G, 4G, 5G mobile networks, and a Zigbee connection.

The system 200 also includes a database 210. As used herein, the database 210 is an organized collection of structured data, typically stored in a computer system and designed to be easily accessed, managed, and updated. The database 210 may be in form of a central repository of information that may be queried, analysed, and processed to support various applications and business processes. In the system 200, the database 210 provides mechanisms for storing, retrieving, updating, and deleting data, and typically includes features such as data validation, security, backup and recovery, and data modelling.

The system 200 further includes an input device 212 and an output device 214. The input device 212 may take various forms depending on the specific application of the system 200. In an example, the input device 212 may include one or more of a keyboard, a mouse, a touchscreen display, a microphone, a camera, or any other hardware component that enables the user to interact with the system 200. Further, the output device 214 may be in the form of a display, a printer, a communication channel, or the like.

In the present system 200, the processing unit 204 and accompanying components have connectivity to the memory unit 206 via the bus 202. The memory unit 206 includes both dynamic memory (e.g., RAM, magnetic disk, writable optical disk, etc.) and static memory (e.g., ROM, CD-ROM, etc.) for storing executable instructions that when executed perform the method steps described herein for digitalizing and analysing the engineering diagram for the industry environment. In particular, the memory unit 206 includes an engineering diagram analysis module 216 to perform steps for the said purpose. Herein, the engineering diagram analysis module 216 causes the processing unit 204 to receive one or more engineering diagrams of the industry environment for processing. Also, in the system 200, the memory unit 206 may be configured to store the data associated with or generated by the execution of the inventive steps.

Referring to FIGS 1-2 in combination, the various steps of the method 100 (as described hereinafter) may be executed in the system 200, or specifically in the processing unit 204 of the system 200, for digitalizing and analysing the engineering diagram for the industry environment. It may be appreciated that although the method 100 is illustrated and described as a sequence of steps, it may be contemplated that various embodiments of the method 100 may be performed in any order or a combination and need not include all of the illustrated steps.

At step 110, the method 100 includes converting raw data from the engineering diagram, including at least one of graphical symbols, textual annotations, and connections, into a structured digital data through an extraction process. This extraction process is initiated by collecting raw data from the engineering diagram, which may include, but is not limited to, graphical symbols representing various components of the system, textual annotations that provide specific details about these components, and connections indicating the relationships and pathways between different elements of the engineering system. The graphical symbols are identified and deciphered to determine the type of components they represent within the industry environment. These may include mechanical devices, electrical components, and control instruments, each symbolizing a distinct part of the engineering system's architecture. The textual annotations, which may consist of labels, specifications, or operational parameters, are extracted to provide context and additional information about the graphical symbols. Connections depicted in the engineering diagram, such as pipelines, wiring, or data flow paths, are analysed to understand the interaction and interface between various components.

In an embodiment, converting the raw data into the structured digital data comprises implementing one or more of optical character recognition (OCR) and symbol recognition algorithms to detect at least one of graphical symbols, textual annotations, and connections from scanned images or digital representations of the engineering diagram. The application of OCR helps in translating the textual content embedded within the engineering diagrams into machine-readable data. This text may encompass a variety of annotations, including but not limited to, equipment labels, operational parameters, and safety instructions. OCR technology ensures that this text is captured accurately and transformed into a digital format that retains the information's contextual relevance to the associated graphical symbols. Symbol recognition algorithms helps in identifying the graphical symbols within the engineering diagrams. These symbols, which are often standardized according to industry norms such as those established by the International Society of Automation (ISA) S5.1 standard, represent the physical components of the engineering system.

This conversion process is especially relevant in the context of end-to-end digitalization of legacy P&IDs within Brownfield scenarios, where plants have operated for years, often with documentation created before the advent of smart engineering diagram authoring tools. In these cases, the conversion algorithms transform legacy diagrams into structured formats that are compatible with analytical tools. Conversely, in Greenfield scenarios, where the engineering diagrams are already available in digitized formats adhering to standards such as DEXPI (Data Exchange in the Process Industry), this facilitates knowledge graph (KG) driven analytics by post-processing the data through the transformation to the defined ontology specifically crafted for graph analytics (as discussed later in the description).

At step 120, the method 100 includes mapping the structured digital data to a predefined standards-based ontology to generate a knowledge graph, compliant with predefined semantic standards, corresponding to the engineering diagram, wherein the predefined standards-based ontology comprises entities and their corresponding attributes, and interrelations therebetween related to the engineering diagram. This predefined standards-based ontology (hereinafter, sometimes, simply referred to as "ontology") is a comprehensive semantic framework that systematically categorizes the various entities represented in the engineering diagram and delineates their corresponding attributes. Mapping the structured digital data to this ontology involves correlating each piece of extracted data to the corresponding entity within the ontology. This process ensures that the digital representation of the engineering diagram in the form of a knowledge graph is semantically rich and aligned with the predefined standards, facilitating interoperability and consistency across different systems and scenarios within the industry environment. The knowledge graph thus generated serves as a semantically enriched digital twin of the engineering diagram, enabling advanced analysis and reasoning. The knowledge graph allows for the subsequent analytical processes that leverage this enriched data structure to derive actionable insights and foresight pertinent to the industry environment.

Herein, the predefined standards-based ontology may include entities ranging from tangible components like pumps and valves to abstract concepts like flow rates and operational states. Each entity is defined with a set of attributes that provides a detailed description of its properties-attributes that may include specifications such as size, capacity, material, or other pertinent characteristics intrinsic to the entity's role within the industry environment. Moreover, the ontology encapsulates the interrelations between these entities, which may manifest as physical connections, functional dependencies, or control relationships. These interrelations are crucial for understanding how the entities interact with one another within the system, providing insights into the engineering diagram's operational flow and potential points of convergence or divergence.

In an embodiment, the predefined standards-based ontology is developed by defining logical axioms pertaining to a domain of the industry environment, that facilitates semantic inferencing, for deduction of implicit relationships for data points in the knowledge graph. Logical axioms are essentially rules that describe how different concepts relate to each other within the ontology. These axioms are fundamental to the ontology as they provide the necessary structure for semantic inferencing, enabling the ontology not only to represent explicit information but also to deduce implicit relationships among data points in the knowledge graph. For instance, an axiom may define that if a pump is connected to a valve via a particular type of piping, and that type of piping is typically used for a specific chemical, then it can be inferred that the pump is part of a system handling that chemical. This inferencing ability generates the knowledge graph that is not only a direct mapping of the structured digital data, but may also autonomously identify patterns, establish connections, and reveal insights that are not overtly apparent, thereby enhancing the decision-making capabilities within the industry environment.

In the present embodiments, mapping the structured digital data to the predefined standards-based ontology comprises utilizing an Extract, Transform, Load (ETL) process to align at least one of the graphical symbols, the textual annotations, and the connections with corresponding at least one of the entities and the interrelations in the predefined standards-based ontology. The ETL process serves as a mechanism by which the structured digital data is systematically aligned with the entities and interrelations defined in the ontology. The ETL process begins with the extraction phase, where data points such as graphical symbols representing components like valves or sensors, textual annotations that provide specific details like measurements or operational parameters, and connections denoting the relationships between components, are retrieved from the structured digital data. Following extraction, the transformation phase involves interpreting these data points and converting them into a format that is consistent with structure of the ontology. This sub-step may include translating proprietary symbols into a standardized recognized by the ontology. Subsequently, the load phase involves integrating the transformed data into the knowledge graph, ensuring that each symbol, annotation, and connection is correctly situated within the knowledge graph according to the ontology. For instance, a graphical symbol for a pump in the structured digital data may be loaded into the knowledge graph as an instance of the `Pump' entity, with its attributes and relationships to other entities-like pipes or valves duly represented as specified by the ontology. Thus, this ETL process ensures that the structured digital data is properly mapped to the ontology This ETL process ensures that the structured digital data is not only mapped to the ontology but is done so in a way that maintains the integrity and semantic richness of the information contained within the engineering diagram, maintaining the integrity and semantic structure of the information contained within the engineering diagram.

In some embodiments, the predefined ontology is defined in Web Ontology Language (OWL). OWL is an ontology language defined by World Wide Web Consortium (W3C) and is widely recognized for its robustness and versatility in semantic web and knowledge representation applications. By utilizing OWL, the ontology is provided with rich descriptive capabilities, allowing for the precise representation of complex relationships, hierarchies, and classification of entities pertinent to the engineering diagram and the broader industry environment. The choice of OWL as the ontology language ensures that the knowledge graph is built on a standardized, interoperable platform, facilitating its integration with other semantic web technologies and systems.

In some embodiments, the method 100 further comprises applying a set of semantic rules for validating the knowledge graph against the predefined standards-based ontology using Shapes Constraint Language (SHACL). Herein, applying the set of semantic rules comprises executing SPARQL-based Quality Assurance (QA) queries to identify data discrepancies and to implement data integrity across the knowledge graph. SHACL is employed to define and enforce constraints on RDF (Resource Description Framework) data within the knowledge graph, ensuring that the data adheres to the established ontology. This validation process helps in maintaining the integrity and accuracy of the knowledge graph. By applying SHACL constraints, inconsistencies or deviations in the knowledge graph from the predefined ontology can be identified and rectified. For instance, if the ontology specifies a certain range of acceptable values for an attribute of an entity, SHACL can be used to validate that the data in the knowledge graph falls within this range. Similarly, SHACL can enforce rules related to the presence or absence of certain data, the specific types of relationships that can exist between entities, and other structural aspects of the knowledge graph as dictated by the ontology.

At step 130, the method 100 includes conducting graph-based analytics on the knowledge graph to extract one or more parameters pertaining to the engineering diagram, for the industry environment. This step involves extracting valuable information from the knowledge graph, which directly corresponds to the engineering diagram within the context of the industry environment. The graph-based analytics employed in this step may include a variety of advanced techniques and algorithms specifically designed to interpret the complex web of data represented in the knowledge graph. These techniques may involve uncovering patterns, relationships, and dependencies that may not be immediately evident from the engineering diagram but help in understanding the operational dynamics and interactions within the industry environment.

Herein, the graph-based analytics may provide ability to identify and evaluate parameters that are intrinsic to the components and processes represented in the engineering diagram. For instance, this may involve analysing the flow rates through pipelines, the operational efficiency of mechanical equipment, or the interdependencies between control systems and their associated instruments. The analytics may also extend to assessing the impact of changes within the industry environment, such as the introduction of new components or the modification of existing connections. Moreover, the graph-based analytics may also include dynamic and predictive analysis, such as the ability to model and forecast potential system behaviours under varying conditions, enabling proactive decision-making and optimization within the industry environment.

In one embodiment of the present invention, conducting the graph-based analytics comprises executing property graph-based traversal algorithms to navigate the knowledge graph and determine equipment connectivity and control loop configurations from the engineering diagram, in the industry environment. These traversal algorithms may effectively map out the connectivity patterns between different pieces of equipment as represented in the engineering diagram. This mapping helps in understanding how various components of the industry environment are interlinked, allowing for an in-depth analysis of the operational workflow. This helps in assessing the efficiency and reliability of the control systems in place, providing a basis for optimization and improvement in the industry environment.

In another embodiment of the present invention, conducting the graph-based analytics comprises executing centrality and path analysis algorithms on the knowledge graph to determine pathways and potential points of failure from the engineering diagram, in the industry environment. Centrality analysis helps in highlighting components that play a role in a functionality of, for example, the control system, thus directing attention to areas of potential risk or importance. Path analysis algorithms contribute by mapping out the various pathways that exist within the system, as depicted in the engineering diagram, and are thus useful in identifying potential points of failure or bottlenecks within the system. This detailed analysis enables a deep understanding of layout, functionality, and potential vulnerabilities of the engineering system, thereby facilitating informed decision-making and strategic planning in the industry environment.

In an example implementation of the present invention, the graph-based analytics is conducted to perform impact analysis for evaluating potential implications of component failures within the industry environment. Utilizing the detailed data structure of the knowledge graph, multiple scenarios may be simulated wherein specific components or subsystems fail or malfunction. The impact analysis algorithm then assesses how these failures propagate through the interconnected network, affecting other components and the overall functionality of the system. This analysis helps in identifying vulnerabilities and critical points in the industry environment, allowing for proactive measures to mitigate risks and ensure proper working of the system.

In another example implementation of the present invention, the graph-based analytics is conducted to perform pattern recognition to identify recurring subgraph configurations across the knowledge graph, indicative of standard subsystems or assemblies within the industry environment. By detecting these patterns, it may be possible to recognize common designs, operational setups, and interconnections that recur across different parts of the engineering diagram. This recognition helps in understanding the standardized practices within the industry, and also aids in streamlining maintenance, troubleshooting, and upgrades by applying insights learned from one part of the system to similar configurations elsewhere.

In yet another example implementation of the present invention, the graph-based analytics is conducted to perform root cause analysis utilizing the knowledge graph to determine origin of system failures or performance anomalies within the industry environment. By examining the interrelations and dependencies among various components in the knowledge graph, it may be possible to determine the initiating factors or sequences of events that led to a failure or anomaly. This analysis is particularly beneficial for diagnosing complex issues where the root cause is not immediately apparent due to the complex nature of the system components. Root cause analysis aids in rectifying immediate issues, and also for implementing long-term solutions to prevent recurrence, thereby enhancing the operational reliability and efficiency of the industry environment.

In some embodiments, the method 100 further comprises implementing machine learning algorithms to generate graph embeddings from the knowledge graph for one or more of computation of similarity scores between different engineering diagrams based on respective topological and functional attributes, and generating design recommendation(s) for auto-completion of other engineering diagrams for the industry environment. Graph embeddings, as used herein, involve creating a large-dimensional vector space representation of the knowledge graph that corresponds to the engineering diagram. This vector space representation transforms the graph data into a format suitable for machine learning algorithms.

In one implementation, the graph embeddings are utilized in the computation of similarity scores between different engineering diagrams. By representing the engineering diagram in a vector space, the system can quickly and efficiently compute the degree of similarity between any two diagrams based on their respective topological and functional attributes. This ability to rapidly compare the engineering diagram is especially valuable in contexts where similar assemblies or subsystem configurations need to be identified across different plants, enhancing the overall understanding and management of plant operations.

In another implementation, the graph embeddings are utilized in the development of design recommendations and auto-completion features for other engineering diagrams in the industry environment. By analysing the patterns and structures present in existing engineering diagrams, it may be possible to generate suggestions for completing or enhancing new or incomplete engineering diagrams. This application uses the domain-specific information encoded in the knowledge graph representation of each element of the engineering diagram, allowing for contextually relevant design recommendations.

Furthermore, in some examples, the method 100 includes application of the machine learning algorithms to the knowledge graph for conducting root cause analysis for explainability. This approach enables to identify the origins of system failures or performance anomalies, and also provide understandable explanations for these events. Such explainability is important, especially in complex industrial settings where understanding the reasons behind faults critical. In other examples, the method 100 includes the application of frequent subgraph mining techniques to detect recurring subgraph configurations within the knowledge graph, which correspond to similar assemblies or subsystems. This detection is useful for identifying standard configurations and patterns that recur across different engineering diagrams within or across plants, and thus helps in standardization and optimization of plant designs and processes.

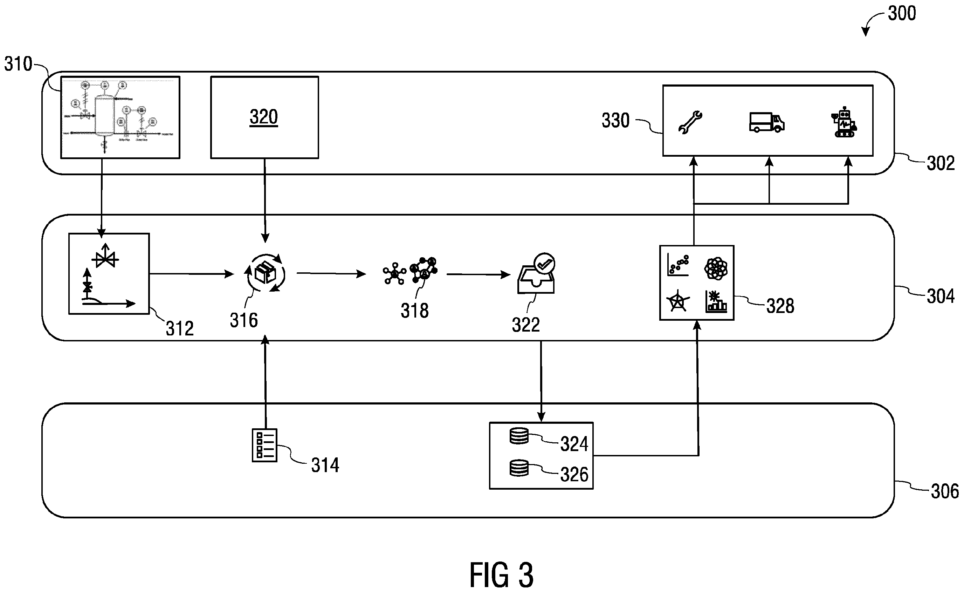

Referring to FIG 3, illustrated is a schematic diagram for a process flow (as represented by reference numeral 300) for digitalizing and analysing the engineering diagram for the industry environment, in accordance with one or more embodiments of the present invention. The process flow 300 encapsulates the end-to-end workflow, from the initial extraction of data from engineering diagrams to the final application of analytical tools designed for industrial operations. The process flow 300 of FIG 3 is based on the method 100 (and may be executed by the system 200) detailed in the preceding paragraphs. The steps presented in the process flow 300 integrate with the overall method 100 and the system 200, providing application of the present invention in real-world scenarios.

Within the process flow 300, the architecture for digitalizing and analysing the engineering diagrams is divided into multiple layers, each serving a distinct function within the overall method. These layers may include a client applications layer 302, a service layer 304, and a storage layer 306. The client applications layer 302 serves as a front-end interface through which users interact with the system 200. This layer hosts a suite of client applications that cater to various analytical and operational needs within the industry environment. Additionally, the client applications layer 302 provides an intuitive user interface, enabling users to engage with the system 200, navigating through complex data sets, and extracting actionable insights through visual representations and interactive controls. The service layer 304 operates as the intermediary between the user-facing layer and the data storage backend. The service layer 304 may include a collection of services and analytical tools that perform sophisticated operations on the data. The storage layer 306 is where data is stored and managed. The storage layer 306 is designed to ensure data integrity, facilitate efficient data retrieval, and support the complex queries initiated by the service layer 304.

The process flow 300, generally, includes the extraction of elements and metadata from the engineering diagrams, followed by a transformation process that translates this information into a structured data format suitable for advanced analysis. This structured data is then represented in a knowledge graph, which undergoes semantic validation and inferencing to ensure accuracy and consistency. The ontology underlying this process includes the domain-specific knowledge necessary for comprehensive understanding and manipulation of the data. The resulting information is stored in a dual-format database system, enabling versatile data retrieval and manipulation, for a range of functions, such as searching, topological and impact analysis, and identification of relationships between system components, and for various client needs, including predictive maintenance, supply chain optimization, and automation within the industrial domain.

Specifically, as depicted in the process flow 300 of FIG 3, an engineering diagram 310 is inputted to an extraction module 312 that detects symbols, text, interconnections and associated metadata and outputs a structured result. Specifically, the extraction module 312 is designed to interpret the various components of the diagram, such as mechanical, electrical, and control elements, and translate these into a structured digital format. More specifically, the graphical symbols in the engineering diagram 310, which may represent equipment like valves, sensors, and actuators, are identified by the extraction module 312. This identification process involves recognizing the symbols' shapes, sizes, and other graphical attributes that are distinctive to each component type within the industry environment. The extraction module 312 is also equipped to parse the textual annotations, capturing the data in a format that retains the annotations' association with their respective symbols. Connections within the engineering diagram 310, indicative of the relationships between the different components, are also captured by the extraction module 312. The outcome of the extraction process is a structured result that transforms the static elements of the engineering diagram 310 into dynamic and manipulable digital data. This structured digital data is then ready for further processing and analysis within the system 200. In the present embodiments, the extraction module 312 is configured to provide the structured digital data based on a predefined standards-based ontology 314.

As discussed, the engineering diagram 310, such as P&ID artifacts, contain rich information about the various components including the process equipment such as pumps, compressors, and oil air coolers to name a few; used by the underlying plant process, the process control instrumentation such as valves, sensors etc. used to control and monitor the process and process piping information which conveys the interconnection and flow direction between equipment and instruments in the plant. The symbols used to represent these various components in the P&ID are typically based on standards such as, but not limited to, ISA S5.1, PIP PIC001, ANSI ISA 5.1, ISO 15519-2, ISO 10628-2. Herein, the predefined standards-based ontology 314 includes a semantic representation of P&ID(s) that forms the foundation model for realizing P&ID analytics. The W3C standards-based Web Ontology Language (OWL) representation is used for defining the predefined standards-based ontology 314. The ontology 314 captures a fundamental set of concepts (Classes) and the relationship between concepts (Properties) within the P&ID domain.

The ontology 314 include several fundamental entities that encapsulate the diverse aspects of the engineering diagram 310. In an exemplary case of a P&ID diagram, some of the core concepts contained within the ontology 314 include, but not limited to:
- P&ID Diagram: P&ID Diagram represents a single standalone P&ID artifact. This can additionally be connected to other P&IDs via inlets or outlets since for the whole plant there will be multiple P&IDs capturing the topology spanning several diagrams.
- Equipment: P&IDs are composed of equipment used in the process. For example: Oil Air Coolers, Heat Exchangers, Compressors, and other mechanical devices are captured with proper identification and associated properties relevant for each equipment type.
- Instruments: P&ID also contains devices to measure parameters of interest such as temperature, pressure, level, flow rate etc., which are all captured in the ontology 314 along with their appropriate units. This can also include controllers to control the parameters of interest. Examples of instruments include indicators, transmitters, PLCs and sensors and their location.
- Valves: Valves are used to control the flow of the fluid in the processing plant. They are represented in the ontology 314 as a separate category since there are many types of valves such as manual, ball, butterfly, gate, control etc.
- Lines: Lines include the crucial information pertaining to the interconnections; specifically, the process equipment and instrument connected by the piping (source and destination) as well as the properties of the piping itself. This may further include connection properties including line type, example line carrying fuel oil or oxygen, its diameter, and physical properties to name a few; direction of flow which is inferred from the source and destination of the piping; the connection type itself could be varied ranging from process piping, electrical signal, pneumatic signal, and software links to name a few.
- Tags: Functional tags associated with the equipment and in general text attributes associated with the equipment symbols.
- Graphical elements: Graphical elements represent position and coordinate information of the various elements such as symbols, text and lines
- Supporting documentation: In addition to P&ID itself, the ontology 314 represents info from supplementary documents such as: Process Flow Diagrams (PFDs), Equipment and instrument specifications, Operational documents provided by the customer operating the plant, Hazard and safety manuals, Tables and Notes within the P&ID to denote company specific conventions
- Rules and constraints: The ontology 314 encapsulates not only the topological layout, but also general and use case specific constraints and rules that can come from various sources. This allows a knowledge graph (as discussed later) to then acquire and integrate information into an ontology and apply ontological reasoning using the data and the defined rules on the data to derive new knowledge which can either be generated on the fly or materialized in a database.

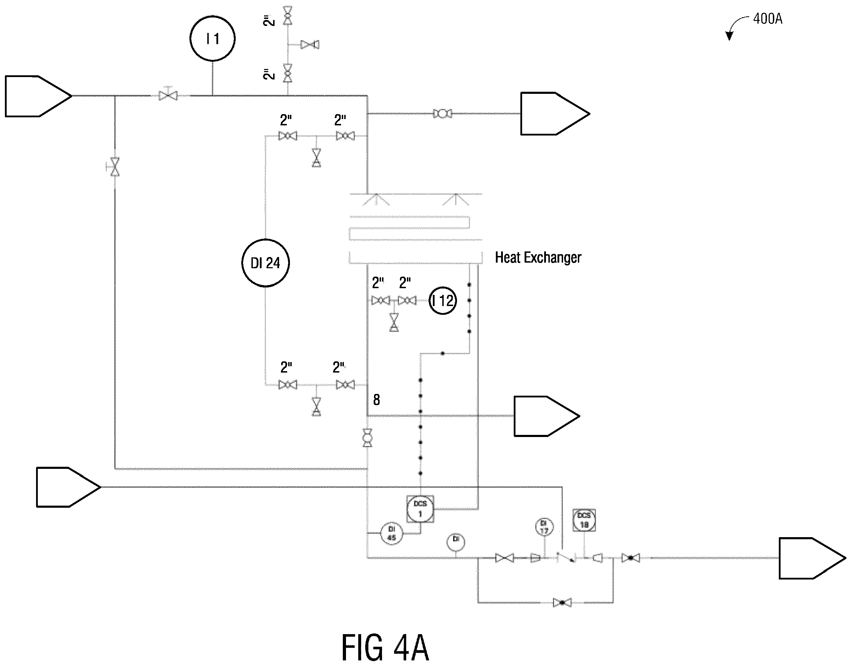

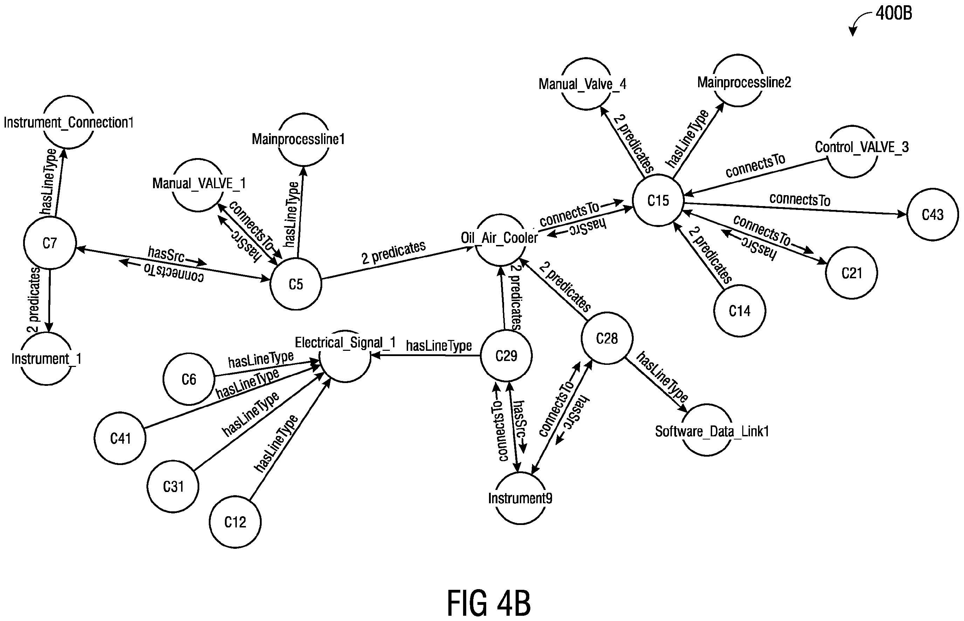

Further, as illustrated in FIG 3, the process flow 300 includes implementation of an ETL pipeline 316 for construction of a knowledge graph 318, process referred to as Knowledge Graph ETL. The ETL pipeline 316 translates the structured data (in the extraction module 312) derived from the engineering diagram 310 into a format that is compatible with the ontology 314, thereby facilitating the creation of the knowledge graph 318. In the present disclosure, referring to FIG 4A, illustrated is an exemplary engineering diagram 400A for an industry environment; and referring to FIG 4B, illustrated is an exemplary knowledge graph 400B corresponding to the engineering diagram 400A based on predefined standards-based ontology, in accordance with one or more embodiments of the present invention.

In the process flow 300, the input for the ETL pipeline 316 may vary depending on the specific scenario. In the case of legacy P&IDs, which are particularly relevant in Brownfield scenarios where plants have been in operation for years (before availability of smart authoring tools), the input comes from custom extraction, as discussed. This structured result includes the detailed information contained within the legacy engineering diagrams in a digital format, ready for further processing. Alternatively, in Greenfield scenarios, where the engineering diagrams are already available in digitized formats from smart authoring tools 320 conforming to standards like DEXPI (Data Exchange in the Process Industry), the ETL pipeline 316 takes this digitized representation as input. Even in these cases, where the engineering diagrams are initially created in a digital format, the ETL pipeline 316 transforms this data to align with the ontology 314, enabling the subsequent generation of the knowledge graph 318.

The process flow 300 further involves semantic validation and inferencing pipeline 322 to refine integrity and semantic accuracy of the knowledge graph 318. To complement representation of the ontology 314 related to the domain, which is both open-ended and relatively stable, SHACL is utilized to define application-specific validations on the knowledge graph 318. These validations ensures that the data within the knowledge graph 318 adheres to structure and rules of the ontology 314. The validations established by SHACL are represented as a series of constraints which needs to be satisfied by the entities within the knowledge graph 318, which are grouped into specific classes (node level constraints). Additionally, constraints are also applied to the properties that connect these nodes within the knowledge graph 318 (property level constraints). By setting these constraints, the process flow 300 can validate the structural and relational integrity of the knowledge graph 318, ensuring that it is in line with specifications of the ontology 314.

Once these constraints are defined, the data and the corresponding shape, which embodies the conjunction of these constraints, are stored in separate named graphs. SHACL is then deployed to execute the target shape against the data. This execution results in the generation of a validation report, which indicates whether the data satisfies the defined conditions. This step identifies and rectifies any inconsistencies in the data, such as missing or incorrect values. In addition to these validations, the process flow 300 may also incorporate OWL axioms into its model to enable inferencing. These rules, defined as logical axioms within the ontology, are executed to determine new implicit facts from the existing data and axioms.

Following the execution of validation and inferencing, the resultant data is cleansed, standardized, and enhanced, rendering it for graph-based analytics. Herein, the knowledge graph 318 is serialized as Turtle (TTL) files, a format that facilitates the integration and storage of the graph data. The knowledge graph 318 is, then, stored in a semantic triplestore that includes a RDF graph database 324 and a property graph database 326. This dual storage approach ensures that the knowledge graph 318 may be utilized effectively for a range of analytical purposes, leveraging the strengths of both property graph and RDF data models, providing a comprehensive platform for analytics of the engineering diagram 310.

Further, as illustrated in FIG 3, in addition to the ontological representation, the process flow 300 may include application of graph algorithm techniques (as represented by block 328) for extracting automated insights from the engineering diagram 310 (as represented by block 330). These analytics techniques are exposed as services within an analytics toolbox for consumption by users and client applications across different verticals that need to leverage intelligence from the engineering diagrams (such as, the engineering diagram 310). Herein, the richness of the insights increases as the domain knowledge is also being considered in addition to the topology of the engineering diagrams.

In an implementation, the knowledge graph 318 may be utilized for graph pattern search and matching. Herein, W3C standards based SPARQL query language is used to specify graph patterns that can query the connected knowledge graphs belonging to the whole plant. Complex SPARQL queries can be constructed by embedding the query generation and iteration logic in a general-purpose programming language to configure and generate more complex queries. Using this approach, graph patterns specified in user query that corresponds to a subsection of the engineering diagram 310 is returned with appropriate property values returned.

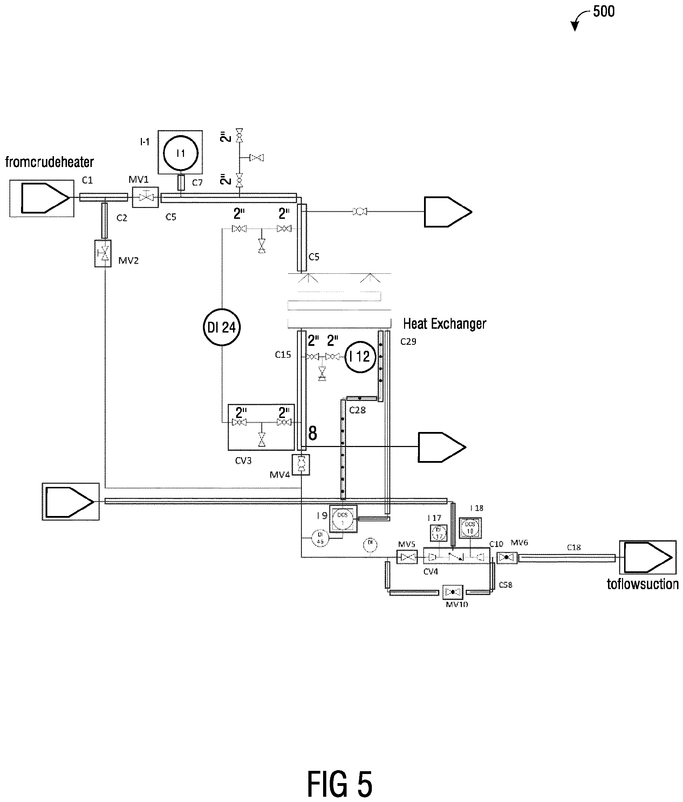

In another implementation, the knowledge graph 318 may be utilized for topological analysis. Property graph analytics are an excellent fit for digital exploration of engineering diagrams using graph traversals and flow algorithms. Herein, several algorithms (especially traversal and centrality) may be applied to the knowledge graph 318 to yield useful insights that are not easy to obtain using traditional approaches which do not rely on graph data models which makes traversals more expensive and cumbersome. The algorithms are configured to run for user specified parameters such as starting/ending point of a node for traversals, filters to show possible traversals along properties of interest only and return attributes and operational metrics of interest along the path configured. FIG 5 is a depiction of topological analysis (as represented by reference numeral 500) for an exemplary engineering diagram. Specifically, FIG 5 shows results from a P&ID traversal given the starting point as inlet "fromcrudeheater" and end point as outlet "toflowsuction". All significant equipment/instruments along this path are annotated in the original P&ID image.

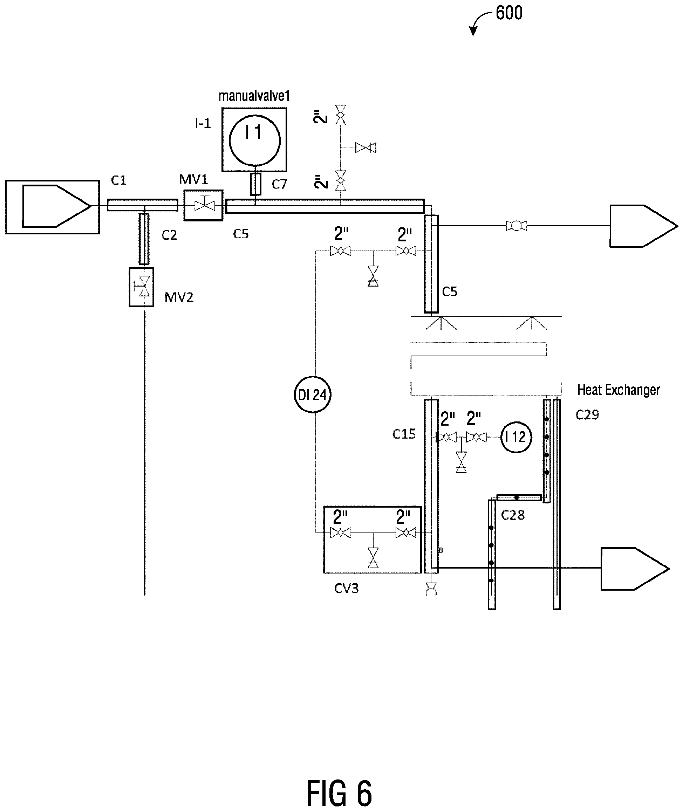

In some examples, the topology of the engineering diagram 310 is also leveraged along with semantics of the ontology 314 to compute criticality scores of elements in the plant which go beyond a pure topological measure which can be used for a more domain relevant impact analysis. FIG 6 is a depiction of impact analysis (as represented by reference numeral 600) for an exemplary engineering diagram. Specifically, FIG 6 shows results from a configured P&ID impact analysis given the equipment "manualvalvel" as node of interest, where relevant elements that stand to be impacted near manualvalve1 are annotated in the original P&ID image.

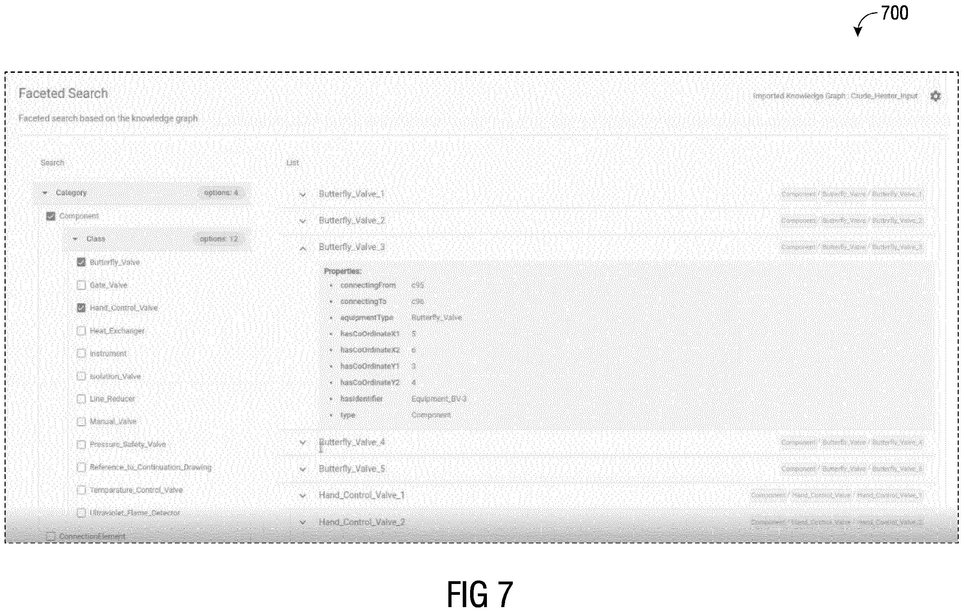

In yet another implementation, the knowledge graph 318 may be utilized for faceted search, which augmenting traditional search techniques where user is typically searching for known patterns with a faceted navigation system, allowing users an exploratory search paradigm to narrow down on search results by applying multiple filters based on faceted classification of items (customized for the engineering diagram use case). As a result, it may be possible to narrow down on element of interest in an exploratory manner by choosing the entities or properties of interest. FIG 7 is a depiction of a user interface (as represented by reference numeral 700) for faceted search by implementing pattern recognition for an exemplary engineering diagram. Herein, the faceted search example showing the properties of butterfly and hand-controlled valves in the selected P&IDs.

In still another implementation, the knowledge graph 318 may be utilized for machine Learning based analytics. Once the knowledge graphs are available, modern, and scalable representations of the graphs can be deployed to derive insights that are not available from other methods. An example is that of graph embeddings. Here, a large dimensional vector space representation of the graphs corresponding to P&IDs can be derived. Once such a representation is derived accurately, it can be subject to vector space-based analyses, such as, for example, quickly computing the similarity between any two P&IDs.

In the present implementation involving graph pattern search and matching as part of the knowledge graph 318, the present invention define and extract specific graph patterns from the connected knowledge graphs of an entire plant. This approach allows for the return of all equipment of a particular type, such as ball valves, complete with their specifications and location information within the plant. The advantage of this method is the enablement of self-service exploration via faceted search, which significantly surpasses traditional dashboard-based insights by allowing for complex querying and expert-driven insights.

For knowledge graph based impact analysis and topological analysis, centrality and traversal algorithms are applied to the knowledge graph 318 to derive insights. This analysis can address scenarios like the failure of a sensor and the possibility of utilizing an alternate sensor 'nearby', or determining the components impacted by the failure of a specific valve. It also includes identifying all compressors without a bypass and assessing types of impact such as hazardous impacts (HAZOP) and shutdowns. This implementation leverages the topology and semantic domain rules represented in the knowledge graph 318, enabling the computation of criticality based on the functionality of assets in addition to their connectivity.

In the context of graph pattern search and matching, the present invention is capable of control loop detection across multiple engineering diagrams, asset sensor proximity analysis, and the listing of sensors and related Key Performance Indicators (KPIs). This functionality may help in conducting robust predictive maintenance using the underlying domain semantics of the knowledge graph 318.

Machine Learning (ML) driven analytics are implemented in the knowledge graph 318 to facilitate the computation of similarity scores between different engineering diagrams, particularly around similar assemblies within and across plants. The use of graph embeddings transforms the complex data into a large-dimensional vector space, making the computation of similarities between different engineering diagrams almost real-time, a process that would otherwise be prohibitively expensive due to the combinatory nature of the data.

Root cause analysis with explainability is another implementation within the knowledge graph 318. This approach provides explainable intelligence on why certain faults occurred, focusing on key parameters across the chain of connections leading to the fault. The inherent structure of the knowledge graph 318 is especially conducive to producing explainability for artificial intelligence (AI) based decisions, which is an advantage over standard ML models that often lack this feature.

Frequent Subgraph mining is utilized within the knowledge graph 318 to detect frequently occurring subgraphs corresponding to similar assemblies or subsystems across a corpus of engineering diagrams within or across plants. This implementation leverages a semantic common ontology to represent engineering diagrams, removing company-specific notational details and providing a system-level view of the plant and similar components across many plants.

Topological analysis, specifically involving traversal algorithms, is applied in the knowledge graph 318 to analyse the flow of fluid in main and secondary processing lines, identify and correlate sensors in the path, and find the shortest paths between two elements of interest. This implementation takes full advantage of the topology and semantic domain rules represented in the knowledge graph 318, facilitating insights that are otherwise challenging to obtain.

The present invention deriving topological and domain insights from the engineering diagrams represented as knowledge graphs (KGs) presents a significant advancement over traditional query approaches. The challenges with conventional methods arises from the necessity of expensive joins and traversals, the lack of flexibility in non-graph data models to effectively capture connected entities, and the absence of a shared, consensual representation of the domain. In contrast, the use of KGs in analysing the engineering diagrams overcomes these limitations, offering a range of benefits that enhance both the efficiency and effectiveness of data analysis.

One of the primary benefits of this approach is the establishment of a standardized and unified view of plant data, which significantly facilitates collaboration and interoperability. This standardization is vital for effective information exchange and the creation of a reusable common vocabulary across different systems that rely on the domain model. By moving away from company-specific notational details, the present invention provides a system-level view of the plant and similar components across multiple plants. This unified view is especially beneficial in scenarios where there is a mix of Brownfield and Greenfield projects, as it allows for the integration of these projects into a source history agnostic representation.

The application of KG analytics to the engineering diagrams offers substantial improvements over traditional methods. Self-service exploration through faceted search allows for complex querying and the generation of expert-driven insights that surpass conventional dashboard-based approaches. The ability of the knowledge graph to leverage both the topology of the engineering diagrams and semantic domain rules enables the computation of criticality based on the functionality of assets in addition to their connectivity. This dual consideration is key to a more comprehensive analysis of operational dynamics of the industry environment.

Root Cause Analysis (RCA) and explainability are further enhanced by the KG approach. Unlike standard machine learning models, the knowledge graph approach is inherently capable of providing explainability for AI-driven decisions. This feature aids plant engineers in conducting root cause analysis of faults in components within the industry environment, with faults possibly arising from various causes specific to different types of equipment. Examples include pipe corrosion or bursting, and electrical signal issues like shorting or interference, all based on rules and knowledge defined within the KG.

Impact analysis is another aspect, wherein the KG approach assesses the consequences of equipment failures. This includes evaluating the impact on interconnected elements and the overall impact, which could be quantified in terms of potential loss in dollar value and other metrics. Herein, the KG approach incorporates domain knowledge in the form of rules and constraints, as well as dynamic sensor and instrument data. This caters to advanced use cases like predictive monitoring sensor placements and intelligent plant design recommendations based on defined Key Performance Indicators (KPIs) .

Further, the traceability of digitized data via KGs enables faster and more comprehensive insights. The use of graph embeddings, for instance, simplifies the comparison of different engineering diagrams. Without KG embeddings, comparing two different engineering diagrams would be prohibitively expensive due to the combinatory nature of the data. However, with embeddings, this comparison becomes a near real-time computation of vector representations, significantly enhancing the efficiency and scope of analysis.

The present invention is configured for the analysis of engineering diagrams (such as, P&IDs) by employing KGs, offering substantial advancements over traditional query methods. By creating a standardized, unified view of plant data, it significantly enhances collaboration and interoperability across various systems. The incorporation of KG analytics allows for complex, expert-driven querying and deeper insights, with the added benefit of leveraging both topological and semantic domain rules for a comprehensive understanding of plant operations. Altogether, these features represent a significant leap in the digitalization and analytical capabilities within the process industry, leading to more informed decision-making, predictive maintenance, and optimized plant design.

While the present invention has been described in detail with reference to certain embodiments, it should be appreciated that the present invention is not limited to those embodiments. In view of the present invention, many modifications and variations may be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

**Reference Numerals**

| | |
|---|---|
| method | 100 |
| step | 110 |
| step | 120 |
| step | 130 |
| system | 200 |
| bus | 202 |
| processing unit | 204 |
| memory unit | 206 |
| interface | 208 |
| database | 210 |
| input device | 212 |
| output device | 214 |
| engineering diagram analysis module | 216 |
| process flow | 300 |
| client applications layer | 302 |
| service layer | 304 |
| storage layer | 306 |
| engineering diagram | 310 |
| extraction module | 312 |
| predefined standards-based ontology | 314 |
| ETL pipeline | 316 |
| knowledge graph | 318 |
| smart authoring tools | 320 |
| semantic validation and inferencing pipeline | 322 |
| RDF graph database | 324 |
| property graph database | 326 |
| graph algorithm techniques | 328 |
| automated insights | 330 |
| engineering diagram | 400A |
| knowledge graph | 400B |
| topological analysis for engineering diagram | 500 |
| impact analysis for engineering diagram | 600 |
| user interface for faceted search | 700 |

## Claims

1. A method (100) for digitalizing and analysing an engineering diagram (310, 400A) for an industry environment, the method (100) comprising:
converting raw data from the engineering diagram (310, 400A), including at least one of graphical symbols, textual annotations, and connections, into a structured digital data through an extraction process;
mapping the structured digital data to a predefined standards-based ontology (314) to generate a knowledge graph (318, 400B), compliant with predefined semantic standards, corresponding to the engineering diagram (310, 400A), wherein the predefined standards-based ontology (314) comprises entities and their corresponding attributes, and interrelations therebetween related to the engineering diagram (310, 400A); and
conducting graph-based analytics on the knowledge graph (318, 400B) to extract one or more parameters pertaining to the engineering diagram (310, 400A), for the industry environment.

2. The method (100) of claim 1, wherein converting the raw data into the structured digital data comprises implementing one or more of optical character recognition (OCR) and symbol recognition algorithms to detect at least one of graphical symbols, textual annotations, and connections from scanned images or digital representations of the engineering diagram (310, 400A).

3. The method (100) of claim 2, wherein mapping the structured digital data to the predefined standards-based ontology (314) comprises utilizing an Extract, Transform, Load (ETL) process to align at least one of the graphical symbols, the textual annotations, and the connections with corresponding at least one of the entities and the interrelations in the predefined standards-based ontology (314).

4. The method (100) of claim 1, wherein the predefined standards-based ontology (314) is developed by defining logical axioms pertaining to a domain of the industry environment, that facilitate semantic inferencing, for deduction of implicit relationships for data points in the knowledge graph (318, 400B).

5. The method (100) of claim 1 further comprising applying a set of semantic rules for validating the knowledge graph (318, 400B) against the predefined standards-based ontology (314) using Shapes Constraint Language (SHACL).

6. The method (100) of claim 5, wherein applying the set of semantic rules comprises executing SPARQL-based Quality Assurance (QA) queries to identify data discrepancies and to implement data integrity across the knowledge graph (318, 400B).

7. The method (100) of claim 1, wherein conducting the graph-based analytics comprises executing property graph-based traversal algorithms to navigate the knowledge graph (318, 400B) and determine equipment connectivity and control loop configurations from the engineering diagram (310, 400A), in the industry environment.

8. The method (100) of claim 1, wherein conducting the graph-based analytics comprises executing centrality and path analysis algorithms on the knowledge graph (318, 400B) to determine pathways and potential points of failure from the engineering diagram (310, 400A), in the industry environment.

9. The method (100) of claim 1, wherein the graph-based analytics is conducted to perform impact analysis for evaluating potential implications of component failures within the industry environment.

10. The method (100) of claim 1, wherein the graph-based analytics is conducted to perform pattern recognition to identify recurring subgraph configurations across the knowledge graph (318, 400B), indicative of standard subsystems or assemblies within the industry environment.

11. The method (100) of claim 1, wherein the graph-based analytics is conducted to perform root cause analysis utilizing the knowledge graph (318, 400B) to determine origin of system (200) failures or performance anomalies within the industry environment.

12. The method (100) of claim 1 further comprising implementing machine learning algorithms to generate graph embeddings from the knowledge graph (318, 400B) for one or more of: computation of similarity scores between different engineering diagrams (310, 400A) based on respective topological and functional attributes, generating design recommendation(s) for auto-completion of other engineering diagrams (310, 400A) for the industry environment.

13. The method (100) of claim 1, wherein the engineering diagram (310, 400A) comprises at least one of a piping and instrumentation (P&ID) diagram, an electrical wiring diagram, an engineering design of a technical installation, and a floor layout of a technical installation.

14. A system (200) comprising:
one or more processing units (204); and
a memory unit (206) communicatively coupled to the one or more processing units (204), wherein the memory unit (206) comprises an engineering diagram analysis module (216) stored in the form of machine-readable instructions executable by the one or more processing units, wherein the engineering diagram analysis module (216) is configured to perform method (100) steps for digitalizing and analysing the engineering diagram (310, 400A) within the industry environment, according to any of the claims 1 to 13.

15. A computer-program product having machine-readable instructions stored therein, which when executed by one or more processing units (204), cause the one or more processing units (204) to perform a method (100) according to any of the claims 1 to 13.
